# EUROPEAN PATENT APPLICATION

(11) **EP 4 807 152 A1**
(43) Date of publication of application: **16.09.2026**
(21) Application number: 26163898.5
(22) Date of filing: 11.03.2026
(51) Int. Cl.: F01M 1/12, F01M 11/02, F01M 11/06, F01M 11/00, F16H 57/04

(54) **LUBRICATION AND/OR COOLING OIL SUPPLY CIRCUIT IN A CAR**

(30) Priority: 13.03.2025 IT 202500005154
(71) Applicant: FERRARI S.p.A., 41100 Modena (IT)
(72) Inventor: CONCILIO, Maurizio, 41100 MODENA (IT)
(74) Representative: Studio Torta S.p.A.

(57) **Abstract**

In a lubrication and/or cooling oil supply circuit in a car, a supply pump (7) provided with a suction duct (10) supplies oil along a delivery branch (8) extending from a tank (6) to a utility (4) to be lubricated and/or cooled housed in a chamber (3) connected to the tank (6) via a return branch (9) provided with at least one supply duct (17); the suction duct (10) having an outer channel (19) which is obtained on an outer surface of the suction duct (10), is limited by an outer wall (22) coupled in a fluid-tight manner to the supply duct (17) of the return branch (9), and communicates with the oil tank (6) via at least one opening (25) obtained through the outer wall (22).

## Description

### CROSS-REFERENCE TO RELATED APPLICATIONS

This patent application claims priority from Italian patent application no. 102025000005154 filed on March 13, 2025, the entire disclosure of which is incorporated herein by reference.

### TECHNICAL FIELD

The present invention relates to a lubrication and/or cooling oil supply circuit in a car.

### BACKGROUND

The present invention is advantageously applied in the lubrication and/or cooling of gearboxes and/or reduction units for axles provided with gears and rolling bearings, to which the following discussion will explicitly refer without loss of generality.

In the field of lubrication and/or cooling of gearboxes and/or reduction units for car axles, it is common practice to provide a supply circuit of the type comprising a box-shaped containing body; a chamber obtained in the box-shaped containing body to house inside it a utility to be lubricated and/or cooled, for example the gears and/or the rolling bearings of a gearbox and/or of a reduction unit for axles; a lubrication and/or cooling oil tank obtained in the box-shaped containing body; an oil supply pump; a delivery branch to connect the oil tank, the supply pump and the chamber of the utility to one another; and a return branch to discharge the oil from the chamber of the utility into the oil tank.

The supply circuit further comprises a suction duct interposed between the oil tank and the supply pump to define part of the delivery branch, and an oil filtering device mounted in the suction duct.

The supply circuit furthermore has a temperature sensor to detect the temperature of the oil at the supply pump outlet; a heat exchanger to selectively control the oil temperature in response to a signal of the temperature sensor; a pressure sensor to detect the oil pressure; at least one set screw for lubrication and/or cooling of the rolling bearings; and at least one nozzle for lubrication and/or cooling of the gears.

The return branch comprises at least one supply duct, which is obtained through the box-shaped containing body, and extends between the utility chamber and the oil tank.

The known lubrication and/or cooling oil supply circuits of the type described above have some drawbacks mainly relating to the fact that the movements of oil between the oil tank and the utility chamber generated during the acceleration/braking manoeuvres or in the presence of a sloping road surface result in a lack of oil at the suction duct intake mouth and, consequently, cavitation of the supply pump.

### SUMMARY

The object of the present invention is to provide a lubrication and/or cooling oil supply circuit in a car which is free from the above drawbacks and which is simple and inexpensive to produce.

According to the present invention, a lubrication and/or cooling oil supply circuit in a car is provided as claimed in the attached claims.

### BRIEF DESCRIPTION OF THE DRAWINGS

The present invention will now be described with reference to the attached drawings, which illustrate a non-limiting embodiment example thereof, in which:
figure 1 schematically shows a preferred embodiment of the supply circuit of the present invention;
figures 2 and 3 are two schematic views in section, with parts removed for clarity, of a detail of the supply circuit of figure 1; and
figures 4 and 5 are two schematic perspective views of a detail of figures 2 and 3.

### DESCRIPTION OF EMBODIMENTS

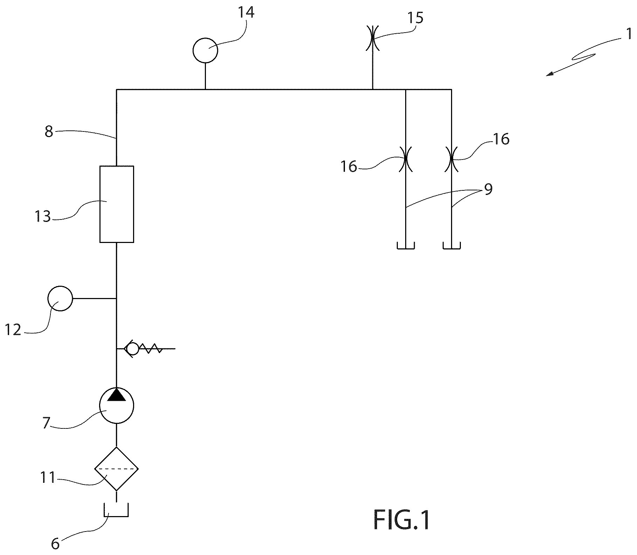

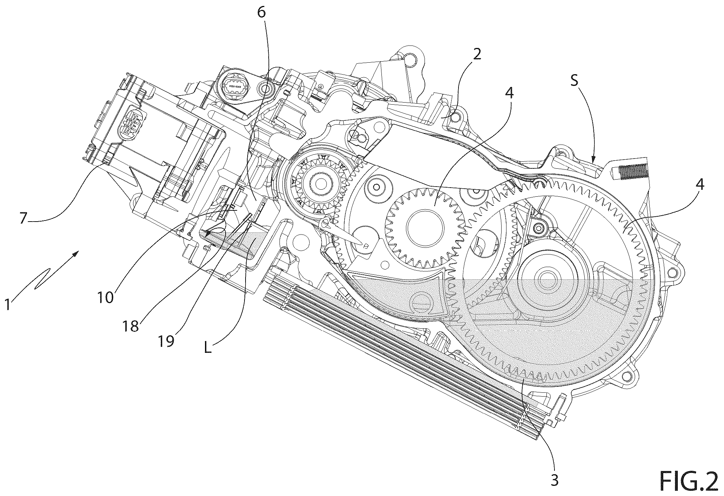

With reference to figures 1 to 3, the number 1 indicates, as a whole, a lubrication and/or cooling oil supply circuit in a car (not illustrated).

The circuit 1 comprises a box-shaped containing body 2 configured to define:
a chamber 3 to house inside it a utility to be lubricated and/or cooled, for example the gears 4 and/or the rolling bearings (not illustrated) of a gearbox and/or of a reduction unit for axles generically indicated by the number 5; and
a tank 6 for the lubrication and/or cooling oil.

The circuit 2 is further provided with a supply pump 7, a delivery branch 8 obtained through the body 2 to connect the tank 6, the pump 7, and the chamber 3 to one another, and a return branch 9 obtained through the body 2 to connect the chamber 3 and the tank 6 to each other.

The branch 8 comprises a suction duct 10 interposed between the tank 6 and the pump 7, a filtering device 11 mounted in the duct 10, a temperature sensor 12 mounted downstream of the pump 7 to detect the oil temperature, a heat exchanger 13 to cool the oil supplied by the pump 7 to the chamber 3, and a pressure sensor 14 mounted downstream of the exchanger 13 to detect the pressure of the oil.

The operation of the pump 7 is selectively controlled by an electronic control unit (not shown) as a function of the temperature and pressure of the oil measured by the sensor 12 and, respectively, by the sensor 14.

The lubrication and/or cooling oil is supplied by the pump 7, for example, to at least one set screw 15 for lubrication of the bearings (not shown) and to at least one nozzle 16 for lubrication of the gears 4.

The return branch 9 comprises at least one supply duct 17, which is obtained through the body 2, extends between the chamber 3 and the tank 6, and faces the tank 6 above a bottom wall 18 of the tank 6.

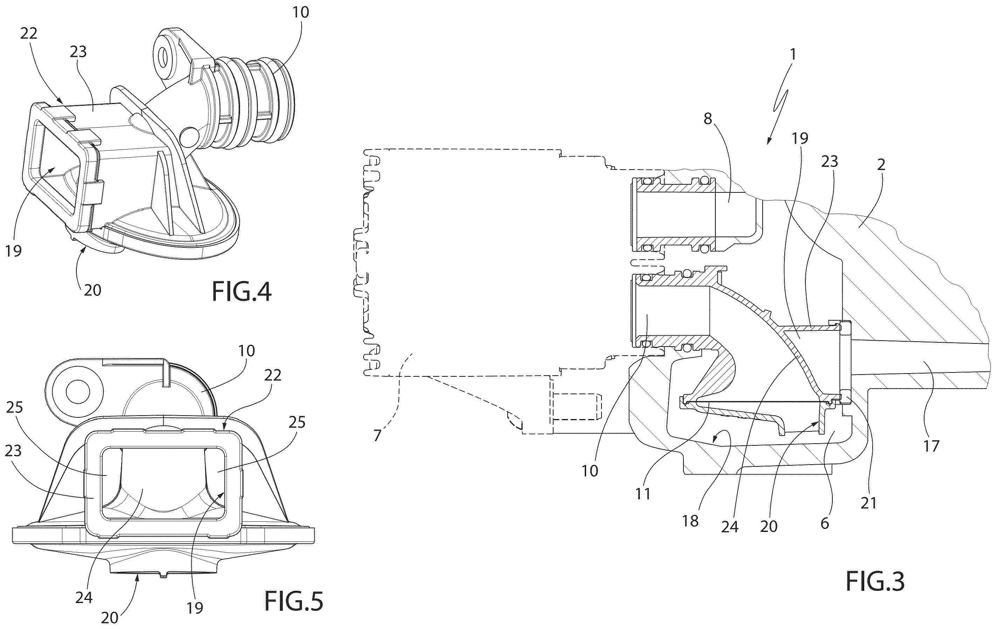

As shown in figures 4 and 5, the suction duct 10 has an outer channel 19, which is obtained on an outer surface of the duct 10, is further obtained above an intake mouth 20 of the duct 10, and is coupled in a fluid-tight manner with the duct 17 by the interposition of an annular gasket 21.

The channel 19 is limited by an outer wall 22 comprising a lateral wall 23, which extends around the duct 17, and is coupled in a fluid-tight manner with the body 2 by means of the gasket 21.

The wall 22 further comprises a bottom wall 24, which is opposite and facing the duct 17, and is provided, in this case, with a pair of symmetrical openings 25, which are obtained on opposite sides of the duct 10 to connect the channel 19 and the tank 6 to each other.

The lubrication circuit 1 has some advantages relating mainly to the fact that:
the supply duct 17 guarantees correct flow of the lubrication and/or cooling oil from the chamber 3 to the tank 6 in conditions of normal use of the car (not shown); and
during the acceleration/braking manoeuvres or in the presence of a sloping road surface, the outer channel 19 allows a relatively high level L of lubrication and/or cooling oil to be maintained inside the tank 6 such as to prevent cavitation of the pump 7.

With regard to the above, it should be noted that the outer channel 19 allows the supply duct 17 to be extended above the intake mouth 20 of the suction duct 10 and, therefore, a relatively high quantity of oil to be trapped in the tank 6 below the duct 17.

## Claims

1. A lubrication and/or cooling oil supply circuit in a car, the supply circuit comprising a box-shaped containing body (2); a chamber (3) obtained in the box-shaped containing body (2) to house, on the inside, a utility (4) to be lubricated and/or cooled; a tank (6) for lubrication and/or cooling oil obtained in the box-shaped containing body (2); an oil supply pump (7); a delivery branch (8) to connect the oil tank (6), the supply pump (7) and the chamber (3) of the utility (4) to one another; a return branch (9) to discharge the oil from the chamber (3) of the utility (4) into the oil tank (6), the return branch (9) comprising at least one supply duct (17) communicating with the oil tank (6); and a suction duct (10) interposed between the oil tank (6) and the supply pump (7) to define part of the delivery branch (8); and **characterized in that** the suction duct (10) has an outer channel (19), which is obtained on an outer surface of the suction duct (10), is delimited by an outer wall (22) coupled to the supply duct (17) of the return branch (9) and communicates with the oil tank (6) through at least one opening (25) obtained through the outer wall (22).

2. The supply circuit according to claim 1 and further comprising a gasket (21) to couple the outer channel (19) and the supply duct (17) to one another in a fluid-tight manner.

3. The supply circuit according to claim 2, wherein the gasket (21) is configured to couple the box-shaped containing body (2) and the outer wall (22) of the outer channel (19) to one another in a fluid-tight manner.

4. The supply circuit according to any one of the preceding claims, wherein the outer channel (19) is obtained above an oil intake mouth (20) in the suction duct (10).

5. The supply circuit according to any one of the preceding claims, wherein the outer wall (22) of the outer channel (19) comprises a side wall (23), which is coupled to the box-shaped containing body (2) in a fluid-tight manner, and a bottom wall (24), which is provided with said openings (25).

6. The supply circuit according to any one of the preceding claims, wherein the supply duct (17) is obtained through the box-shaped containing body (2) and extends between the chamber (3) of the utility (4) and the oil tank (6).

7. The supply circuit according to any one of the preceding claims and further comprising a filtering device (11) mounted inside the suction duct (10).
